# EUROPÄISCHE PATENTSCHRIFT

(11) **EP 3 544 913 B1**
(45) Veröffentlichungstag und Bekanntmachung des Hinweises auf die Patenterteilung: **12.07.2023**
(21) Anmeldenummer: 17822114.9
(22) Anmeldetag: 20.11.2017
(51) Int. Cl.: B65G 51/06, B65G 51/30

(54) **ROHRPOSTHÜLSE MIT EINEM EINSATZ**
PNEUMATIC POST SLEEVE HAVING AN INSERT
CARTOUCHE DE COURRIER PAR TUBE POURVUE D'UN INSERT

(30) Priorität: 24.11.2016 AT 510692016
(43) Veröffentlichungstag der Anmeldung: 02.10.2019
(73) Patentinhaber: Ing. Sumetzberger GmbH, 1110 Wien (AT)
(72) Erfinder: FRIEDRICH, Peter, 1040 Wien (AT)
(74) Vertreter: Müllner, Martin
(86) Internationale Anmeldenummer: PCT/AT2017/060305
(87) Internationale Veröffentlichungsnummer: WO 2018/094433

(56) Entgegenhaltungen:
- EP-A1- 2 657 160
- WO-A1-2009/068574
- WO-A1-2010/131284
- WO-A1-2014/081283
- DE-B- 1 238 402
- DE-C- 466 338
- GB-A- 999 621
- JP-U- S50 127 191

## Beschreibung

### Technisches Gebiet

Die vorliegende Erfindung betrifft eine Rohrposthülse mit einem Hülsenrohr, mit zwei Hülsenköpfen, die an den beiden Enden des Hülsenrohrs mit diesem starr verbunden sind, und mit einem Einsatz zur Aufnahme von zumindest einem zu transportierenden Objekt, z.B. von einem Prüfstab aus Stahl.

### Stand der Technik

Mit Rohrpostanlagen werden verschiedenste Objekte transportiert. Es kann sich dabei um sehr leichte Objekte handeln, wie zum Beispiel um Proberöhrchen für Blutproben, die zur Analyse in ein Labor gesendet werden. In diesem Fall wird normalerweise eine Vielzahl von Objekten (Proberöhrchen) in einer Rohrposthülse transportiert, und man kann diese Proberöhrchen einfach nach dem Empfang der Rohrposthülse herausfallen lassen, zum Beispiel in einen Einlauftrichter einer Analysenstraße.

Es kann sich aber auch um schwere Objekte handeln (zum Beispiel einige Kilogramm). In diesem Fall wird normalerweise nur ein Objekt, maximal werden zwei Objekte, in einer Rohrposthülse transportiert. Derartige Objekte werden derzeit händisch entnommen.

Im Zuge der fortschreitenden Automatisierung wäre es günstig, wenn derartige Objekte automatisch von einem Robotergreifarm entnommen werden könnten. Das Problem, das sich dabei ergibt, besteht darin, dass Rohrposthülsen außen im Wesentlichen kreissymmetrisch sind und sich daher im Rohr um ihre eigene Längsachse drehen. Auch wenn die Objekte in der Sendestation immer gleich eingelegt werden, kommen sie daher dennoch in der Empfangsstation in einer zufälligen Winkelstellung an. Ohne weitere Maßnahmen müsste daher der Robotergreifarm mit Sensoren ausgestattet werden, welche die Winkelstellung des Objekts detektieren, sodass dann der Robotergreifarm entsprechend positioniert (verdreht) werden kann, um das Objekt zu greifen. Abgesehen von dem zusätzlichen Aufwand für die Sensoren muss auch die Mechanik des Robotergreifarms dahingehend verbessert werden, dass dieser genau um einen bestimmten Winkel um die Achse des Robotergreifarms verdreht werden kann.

WO 2010/131284 A1 offenbart eine Rohrposthülse nach dem Oberbegriff des Anspruchs 1. Aus WO 2010/131284 A1 ist bekannt, dass sich das gesamte Hülsenrohr gegenüber den Hülsenköpfen drehen kann. Die dort beschriebenen Rohrposthülsen sind für sehr leichte Gegenstände bestimmt, nämlich für Banknoten. Diese Rohrposthülsen weisen starre Hülsenköpfe auf, geöffnet werden können diese Rohrposthülsen durch ein entsprechendes Tor im Hülsenrohr. Das Hülsenrohr weist einen außermittigen Ballast auf, sodass sich das Hülsenrohr unter dem Einfluss der Schwerkraft immer gleich orientiert (nämlich so, dass sich der Ballast unten befindet). Dadurch befindet sich das Tor im Hülsenrohr immer an derselben Stelle.

Diese Lösung mag für Banknoten gut geeignet sein, für schwerere Gegenstände gibt es aber mechanische Probleme. Bei schwereren Gegenständen ist es besser, wenn die beiden Hülsenköpfe mit dem Hülsenrohr starr verbunden sind und wenn das Hülsenrohr selbst keine Öffnungen aufweist, welche das Hülsenrohr schwächen.

### Darstellung der Erfindung

Es ist Aufgabe der vorliegenden Erfindung, eine Rohrposthülse der eingangs genannten Art dahingehend zu verbessern, dass das transportierte Objekt automatisch von einem Robotergreifarm gegriffen werden kann, ohne dass dieser Robotergreifarm über zusätzliche Funktionen (Drehbarkeit um die Längsachse des Robotergreifarms, Sensoren) verfügen muss.

Diese Aufgabe wird durch eine Rohrposthülse der eingangs genannten Art erfindungsgemäß dadurch gelöst, dass der Einsatz in der Rohrposthülse um die Längsachse des Hülsenrohrs drehbar ist, wobei der Schwerpunkt des Einsatzes samt dem zumindest einen zu transportierenden Objekt außerhalb der Längsachse liegt.

Wenn die Rohrposthülse in der Empfangsstation waagrecht ankommt, dreht sich der Einsatz samt dem transportierten Objekt immer so, dass der Schwerpunkt des Einsatzes samt Objekt möglichst tief liegt, sodass also das zu transportierende Objekt immer in der gleichen Position und in der gleichen Orientierung ankommt, unabhängig davon, wie sehr sich die Rohrposthülse während des Transports um seine Längsachse gedreht hat.

Eine Winkelabweichung um einige Grad ist allerdings dennoch möglich, weil die rücktreibende Kraft bei geringen Fehlstellungen gering ist. (Sie steigt in erster Näherung linear mit dem Winkel der Fehlstellung.)

Um die Genauigkeit der Positionierung zu verbessern, ist nach einer Ausgestaltung der vorliegenden Erfindung vorgesehen, dass der Einsatz mit zumindest einem Magnet oder mit zumindest einem magnetisierbaren Material nahe dem Hülsenrohr versehen ist. Bei einer Rohrpoststation mit einem Empfangsrohr zum Empfang solch einer Rohrposthülse liegt das Empfangsrohr horizontal und ist außen am Empfangsrohr ein Permanent- oder Elektromagnet vorgesehen, der bei empfangener Rohrposthülse gegenüber dem Magnet oder dem magnetisierbaren Material liegt. Bei mehreren Magneten oder mehreren magnetisierbaren Materialien am Einsatz ist dann gegenüber jedem ein Permanent- oder Elektromagnet außen am Empfangsrohr vorgesehen. Dadurch kann die magnetische Anziehung vervielfacht werden. Die Magnete sollen aber nicht nur in Umfangsrichtung zueinander versetzt sein, damit keine falschen Paarungen entstehen können.

Da die Rohrpoststation an der entsprechenden Stelle ebenso einen Magneten aufweist, übernimmt die Magnetkraft die Feinpositionierung, sobald die beiden Magnete (oder der Magnet und das magnetisierbare Material) einander nahe kommen, was infolge der Positionierung mittels der Schwerkraft unmittelbar nach der Ankunft in der Empfangsstation der Fall ist.

Damit das zu transportierende Objekt im Einsatz sicher gehalten ist (was für eine genaue Positionierung notwendig ist), ist es zweckmäßig, wenn der Einsatz einen rohrförmigen Kanal zur Aufnahme des zu transportierenden Objekts aufweist, in welches zumindest ein federbelastetes Andrückelement ragt.

Wenn das zu transportierende Objekt magnetisierbar ist, ist es weiters günstig, wenn der Einsatz zumindest einen Permanentmagnet nahe dem zumindest einen zu transportierenden Objekt aufweist. Dadurch wird die Kraft, die notwendig ist, um das Objekt gegenüber dem Einsatz zu verschieben, vergrößert.

### Kurze Beschreibung der Zeichnungen

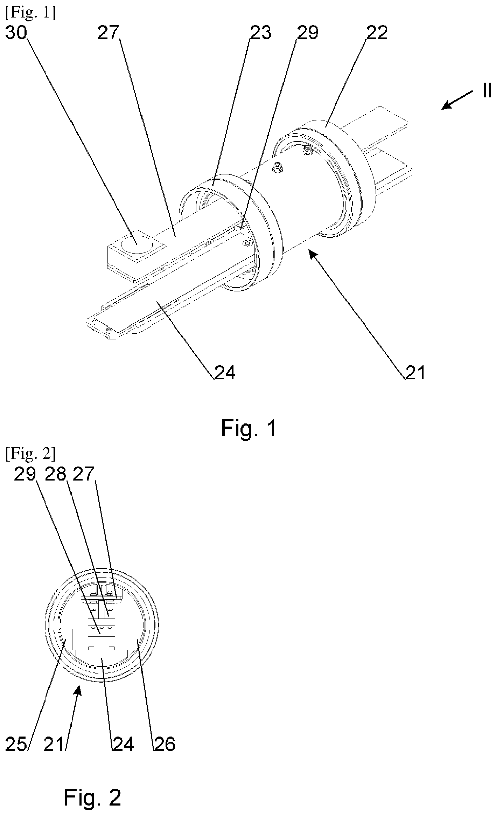

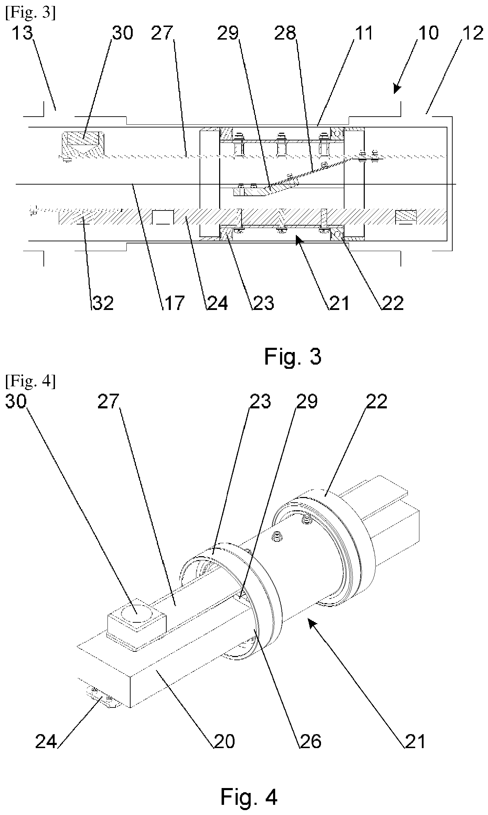

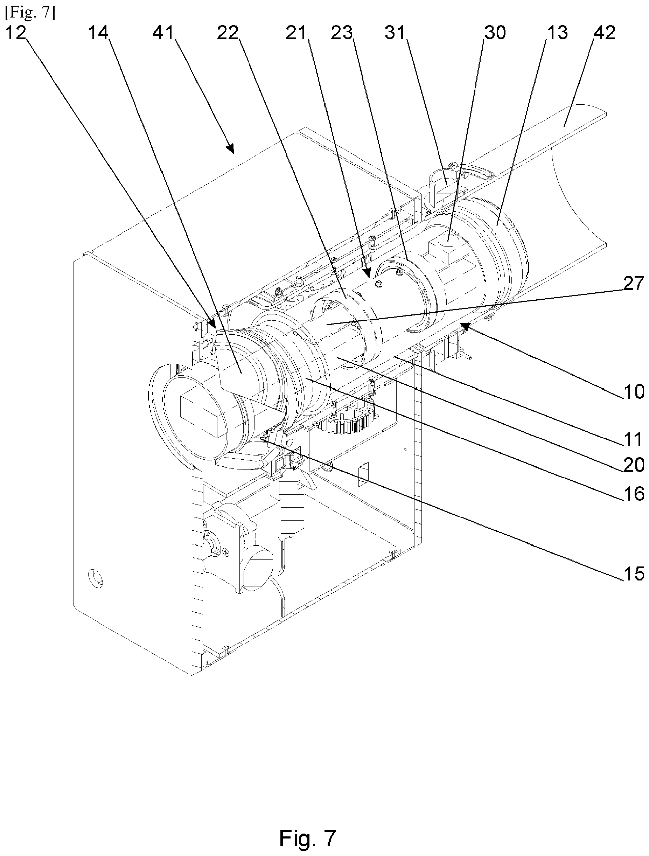

Anhand der beiliegenden Zeichnungen wird die vorliegende Erfindung näher erläutert. Es zeigt: Fig. 1 einen Einsatz für eine Rohrposthülse in perspektivischer Ansicht; Fig. 2 zeigt den Einsatz in einer Stirnansicht in Richtung des Pfeils II von Fig. 1; Fig. 3 zeigt den Einsatz im Längsschnitt, eingesetzt in eine schematisch angedeutete Rohrposthülse; Fig. 4 bis 6 zeigen denselben Einsatz in entsprechenden Ansichten wie die Fig. 1 bis 3, jedoch mit eingeschobenem Prüfstab; und Fig. 7 zeigt eine erfindungsgemäße Rohrposthülse mit Einsatz in einer Rohrpoststation.

### Weg(e) zur Ausführung der Erfindung

Bei der Herstellung von Stahlrohren für die Erdölindustrie muss die Qualität ständig überwacht werden. Zu diesem Zweck werden während der Produktion aus den Stahlrohren genormte (quaderförmige) Probestäbe für die Prüfung der Zugfestigkeit und dgl. geschnitten und mit einem Barcodeaufkleber zur Identifikation versehen. Diese Probestäbe - mit bis zu 6 kg Eigengewicht - werden dann manuell in eine Rohrposthülse eingeladen und per Rohrpost ins Analyselabor gesendet. Damit im Analyselabor die Materialproben von einem Robotergreifarm in einem automatisierten Prozess aus der Rohrposthülse entnommen und in einem Lagersystem für Probestäbe abgelegt werden können, kommen erfindungsgemäße Rohrposthülsen zum Einsatz. Um eine Entnahme durch einen Robotergreifarm zu ermöglichen, sind an die Positionierung, Ausrichtung und Lage der Probestäbe hohe Anforderungen gestellt: Die Probestäbe müssen immer gleich ausgerichtet (z.B. horizontal ausgerichtet) - mit einem maximalen Winkelfehler von 5° - in der Station ankommen.

Im Ausführungsbeispiel weist die Rohrposthülse 10 (s. Fig. 7) ein Hülsenrohr 11 sowie an beiden Enden einen Hülsenkopf 12 bzw. 13 auf. Der Hülsenkopf 12 ist so ausgeführt wie in WO 2010136538 A1 beschrieben, d.h. er weist einen Deckel mit mehreren (z.B. drei) Deckelsektoren 14 auf. Jeder Deckelsektor 14 ist um eine eigene, tangential zur Hülsenlängsachse liegende Drehachse 15 schwenkbar. Die Drehachsen sind in einem Betätigungsring 16, der das Hülsenrohr 11 umfasst, gelagert. Verschiebt man den Betätigungsring 16, dann öffnet der Deckel (in Fig. 7 dargestellt). Der Hülsenkopf 13 kann permanent geschlossen sein, oder der Deckel lässt sich um eine Achse, die parallel zur Hülsenlängsachse ist und im Bereich des Hülsenrohrs 11 liegt, wegschwenken. Auf die genaue Ausführung der Rohrposthülse 10 kommt es aber nicht an.

Wichtig ist, dass in der Rohrposthülse 10 ein Einsatz 21 eingesetzt ist. Dieser Einsatz 21 weist erfindungsgemäß zwei Kugellagerringe 22 und 23 auf. Die Außenschalen der Kugellagerringe 22 und 23 sind mit dem Hülsenrohr 11 verbunden. Daher kann sich der Einsatz 21 gegenüber dem Hülsenrohr 11 frei drehen.

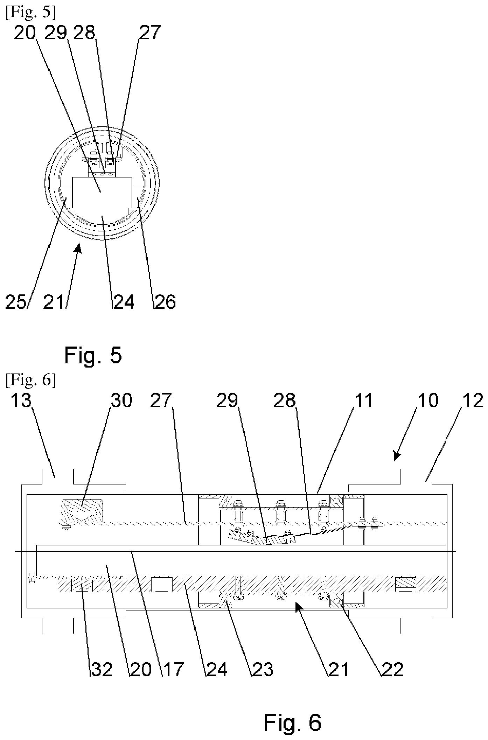

Der Einsatz 21 weist eine untere Auflage 24 (siehe Fig. 1 bis 6) und zwei seitliche Auflagen 25 und 26 (siehe Fig. 2 und 5) auf, sodass sich ein rohrförmiger Kanal ergibt, in den ein Probestab 20 (siehe Fig. 4 bis 6) eingeschoben werden kann. Da sich der Schwerpunkt des Einsatzes 21 samt Probestab 20 außerhalb der Drehachse des Einsatzes, also der Längsachse 17 (siehe Fig. 6) des Hülsenrohrs 11 befindet, dreht sich der Einsatz 21 immer so, dass der Probestab 20 möglichst weit unten liegt.

Gegenüber der unteren Auflage 24 ist ein Träger 27 im Einsatz 21 befestigt. An diesem Träger 27 ist über ein Federblech 28 (siehe Fig. 2, 3, 5 und 6) ein Andrückelement 29 befestigt. Beim Einschieben des Probestabs 20 wird das Andrückelement 29 nach oben gebogen (siehe Fig. 6), sodass es durch die Kraft des Federblechs 28 den Probestab 20 klemmend hält.

Weiters ist in der Auflage 24 ein Permanentmagnet 32 vorgesehen, der den Probestab 20 zusätzlich festhält. Dadurch wird einerseits während des Transportes in der Rohrleitung der Probestab 20 in der Rohrposthülse stabil und fest gehalten, und andererseits überschreitet die Entnahmekraft, die der Robotergreifarm aufbringen muss, dennoch nicht 70 N.

Schließlich ist an dem Träger 27 ein Magnet 30 befestigt, der nahe am Hülsenrohr 11 liegt. Dieser Magnet 30 wirkt mit einem Permanentmagnet 31 (siehe Fig. 7) der Rohrpoststation 41 zusammen, wodurch der Einsatz 21 samt Probestab 20 exakt ausgerichtet wird. Die Magnetkraft bewirkt nämlich, dass die beiden Magnete 30 und 31 genau gegenüberliegen, sobald sie einander nahe kommen. Dies ist nach Ankunft der Rohrposthülse 10 automatisch der Fall, weil das Empfangsrohr 42 der Rohrpoststation waagrecht liegt, sodass auch die Rohrposthülse 10 waagrecht liegt und der Probestab 20 die tiefste Lage einnimmt.

## Patentansprüche

1. Rohrposthülse (10) mit einem Hülsenrohr (11), mit zwei Hülsenköpfen (12, 13), die an den beiden Enden des Hülsenrohrs (11) mit diesem starr verbunden sind, und mit einem Einsatz (21), der zumindest ein zu transportierendes Objekt, z.B. einen Prüfstab (20) aus Stahl, trägt, wobei der Schwerpunkt des Einsatzes (21) samt dem zumindest einen zu transportierenden Objekt außerhalb der Längsachse (17) liegt, wobei der Einsatz (21) in der Rohrposthülse (10) um die Längsachse (17) des Hülsenrohrs (11) drehbar ist, **dadurch gekennzeichnet, dass** der Einsatz (21) zwei Kugellagerringe (22, 23) aufweist, deren Außenschalen mit dem Hülsenrohr (11) verbunden sind, sodass der Einsatz (21) in der Rohrposthülse (10) um die Längsachse (17) des Hülsenrohrs (11) frei drehbar gegenüber dem Hülsenrohr (11) ist.

2. Rohrposthülse (10) nach Anspruch 1, **dadurch gekennzeichnet, dass** der Einsatz (21) mit zumindest einem Magnet (30) oder mit zumindest einem magnetisierbaren Material nahe dem Hülsenrohr (11) versehen ist.

3. Rohrposthülse (10) nach Anspruch 1 oder 2, **dadurch gekennzeichnet, dass** der Einsatz (21) einen rohrförmigen Kanal zur Aufnahme des zu transportierenden Objekts aufweist, in welches zumindest ein federbelastetes Andrückelement (29) ragt.

4. Rohrposthülse (10) nach einem der Ansprüche 1 bis 3, **dadurch gekennzeichnet, dass** der Einsatz (21) zumindest einen Permanentmagnet (32) nahe dem zumindest einen zu transportierenden Objekt aufweist.

5. System umfassend eine Rohrposthülse (10) nach Anspruch 2 und eine Rohrpoststation (41) mit einem Empfangsrohr (42) zum Empfang der genannten Rohrposthülse (10), wobei das Empfangsrohr (42) horizontal liegt und wobei außen am Empfangsrohr (42) ein Permanent- oder Elektromagnet (31) vorgesehen ist, der bei empfangener Rohrposthülse (10) gegenüber dem Magnet (30) oder dem magnetisierbaren Material liegt bzw. wobei bei mehreren Magneten (30) oder mehreren magnetisierbaren Materialien gegenüber jedem ein Permanent- oder Elektromagnet (31) außen am Empfangsrohr (42) vorgesehen ist.

## Claims

1. A pneumatic tube sleeve (10) having a sleeve tube (11), with two sleeve heads (12, 13) which are rigidly connected to the sleeve tube (11) at both ends of the same, and with an insert (21) which carries at least one object to be transported, e.g. a check rod (20) made of steel, wherein the center of gravity of the insert (21) together with the at least one object to be transported is situated outside of the longitudinal axis (17), wherein the insert (21) in the pneumatic tube sleeve (10) is rotatable about the longitudinal axis (17) of the sleeve tube (11), **characterized in that** the insert (21) includes two ball bearing rings (22, 23), the outer shells of which are connected to the sleeve tube (11) such that the insert (21) in the pneumatic tube sleeve (10) is freely rotatable about the longitudinal axis (17) of sleeve tube (11) against the sleeve tube (11).

2. The pneumatic tube sleeve (10) according to claim 1, **characterized in that** the insert (21) is provided with at least one magnet (30) or with at least one magnetizable material in the vicinity to the sleeve tube (11).

3. The pneumatic tube sleeve (10) according to claim 1 or 2, **characterized in that** the insert (21) includes a tubular channel for receiving the object to be transported, into which at least one spring-loaded pressing element (29) is protruding.

4. The pneumatic tube sleeve (10) according to any one of claims 1 to 3, **characterized in that** the insert (21) includes at least one permanent magnet (32) in the vicinity of the at least one object to be transported.

5. A system comprising a pneumatic tube sleeve (10) according to claim 2 and a pneumatic tube station (41) having a reception tube (42) for receiving said pneumatic tube sleeve (10), wherein the reception tube (42) is situated horizontally and wherein on the outside of the reception tube (42) a permanent or electromagnet (31) is provided that, when said pneumatic tube sleeve (10) is received, is situated opposite to said magnet (30) or said magnetizable material, and wherein with a plurality of magnets (30) or a plurality of magnetizable materials a permanent or electromagnet (31) is provided on the outside of said reception tube (42) opposite each, respectively.

## Revendications

1. Curseur (10) pour tubes pneumatiques comportant un cylindre de curseur (11) pourvu de deux têtes de curseur (12, 13) qui sont reliées de façon rigide aux deux extrémités du cylindre de tube (11), et d'un élément intérieur (21) supportant au moins un objet à transporter, par exemple une tige de sondage (20) en acier, le centre de gravité de l'élément intérieur (21), y compris l'au moins un objet à transporter, étant situé en dehors de l'axe longitudinal (17), l'élément intérieur (21) pouvant effectuer, au sein du curseur (10) pour tubes pneumatiques, une rotation autour de l'axe longitudinal (17) du cylindre de curseur (11), **caractérisé en ce que** l'élément intérieur (21) comporte deux roulements à billes annulaires (22, 23) dont les bagues extérieures sont liées au cylindre de curseur (11), faisant en sorte que l'élément intérieur (21) puisse tourner, autour de l'axe longitudinal (17) du cylindre de curseur (11), librement par rapport au cylindre de curseur (11).

2. Curseur (10) pour tubes pneumatiques selon la revendication 1, **caractérisé en ce que** l'élément intérieur (21) est pourvu, à proximité du cylindre de tube (11), d'au moins un aimant (30) ou d'au moins un matériau susceptible de subir une aimantation.

3. Curseur (10) pour tubes pneumatiques selon les revendications 1 ou 2, **caractérisé en ce que** l'élément intérieur (21) comporte un canal tubulaire lequel est destiné à recevoir l'objet à transporter et dans lequel s'étend au moins un élément d'appui (29) sollicité par un ressort.

4. Curseur (10) pour tubes pneumatiques selon l'une des revendications 1 à 3, **caractérisé en ce que** l'élément intérieur (21) comporte, à proximité de l'au moins un objet à transporter, au moins un aimant permanent (32) .

5. Système comprenant un curseur (10) pour tubes pneumatiques (10) selon la revendication 2 ainsi qu'un terminal de transport par tube pneumatique (41) qui comporte un tube de réception (42) destiné à recevoir ledit curseur (10) pour tubes pneumatiques, le tube de réception (42) étant disposé horizontalement, et l'extérieur du tube de réception (42) étant pourvu d'un aimant permanent ou d'un électroaimant (31) lequel se trouve, lorsque le curseur (10) pour tubes pneumatiques est reçu, en face de l'aimant (30) ou dudit matériau susceptible de subir une aimantation ou bien, en cas de plusieurs aimants (30) ou plusieurs matériaux susceptibles de subir une aimantation, l'extérieur du tube réception (42) étant pourvu d'un aimant permanent ou d'un électroaimant (31) en face de chacun de ces derniers.
